## Europäisches Patentamt
## European Patent Office
## Office européen des brevets

(11) Veröffentlichungsnummer: **0 166 175**
**B1**

(12) **EUROPÄISCHE PATENTSCHRIFT**

(45) Veröffentlichungstag der Patentschrift:
23.08.89

(21) Anmeldenummer: 85106059.0

(22) Anmeldetag: 17.05.85

(51) Int. Cl.⁴: **H 02 P 9/42**, B 63 J 3/02

(54) **Stromversorgungsanlage mit einem Wellengenerator.**

(30) Priorität: 27.06.84 DE 3423659

(43) Veröffentlichungstag der Anmeldung:
02.01.86 Patentblatt 86/1

(45) Bekanntmachung des Hinweises auf die Patenterteilung:
23.08.89 Patentblatt 89/34

(84) Benannte Vertragsstaaten:
**BE DE GB IT NL SE**

(56) Entgegenhaltungen:
**EP-A-0 047 867**
**WO-A-83/02099**
**DE-A-3 212 430**
**GB-A-2 130 812**

**HANSA-SCHIFFAHRT-SCHIFFBAU-HAFEN, Band 106, Nr. 10, 1969, Seiten 905-907, DE; W. BRANDES: "Wellengeneratoren in vollautomatisierten Drehstrom-Bordnetzen"**

(73) Patentinhaber: **Licentia Patent- Verwaltungs- GmbH, Theodor- Stern- Kai 1, D-6000 Frankfurt/Main 70 (DE)**

(72) Erfinder: **Kranert, Klaus, Dr.- Ing., Wittenbergener Weg 9, D-2000 Hamburg 56 (DE)**
Erfinder: **Lösekann, Wolfgang, Dipl.- Ing., Autal 1, D-2000 Wedel/Holstein (DE)**

(74) Vertreter: **Lertes, Kurt, Dr., Licentia Patent- Verwaltungs- GmbH Theodor- Stern- Kai 1, D-6000 Frankfurt/M 70 (DE)**

EP 0 166 175 B1

## Beschreibung

Die Erfindung betrifft eine Stromversorgungsanlage nach dem Oberbegriff des Anspruchs 1.

Bekannte Anlagen dieser Art arbeiten überwiegend mit einem Wellengenerator variabler Drehzahl, einem Gleichstromzwischenkreisumrichter zur Frequenzentkopplung und einer Blindleistungsmaschine, die die Netzblindleistung und die Steuer- bzw. Kommentierungsblindleistung des Umrichters liefert. Eine solche Anlage ist von W. Brandes in der Zeitschrift "Hansa", 1969 Heft Nr. 10, Seiten 905 - 907 mit dem Titel "Wellengeneratoren im vollautomatisierten Bordnetzen" beschrieben worden. Die Blindleistungsmaschine in dieser Anlage wird mit einem Anwurfmotor vom Bordnetz gestartet. Der Wellengenerator ist in vielen Fällen ein Synchrongenerator ohne Polraddämpferkäfig. Die beschriebene Anordnung hat den Nachteil daß sie nur mit Hilfe des Bordnetzes gestartet werden kann, einen relativ ungünstigen Wirkungsgrad aufweist und keine Notlaufeigenschaft hat. Außerdem liefert sie oberschwingungshaltigen Strom ins Bordnetz.

Zur Verbesserung des Wirkungsgrades wurde gemäß PCT-Anmeldung WO 83/02099 der Vorschlag gemacht, den Umrichter nur für die Speisung empfindlicher Verbraucher einzusetzen, die eine hohe Frequenz- und Spannungskonstanz erfordern. Das übrige Netz wird beim Einsatz eines Wellengenerators mit Dämpferkäfig dann von diesem direkt versorgt, wobei die Spannung proportional zur Drehzahl geregelt wird. Dies ist nur für einen relativ geringen Drehzahlbereich der Propellerwelle möglich, da die Leistung der Pumpenantriebe kubisch und die der ohmschen Verbraucher quadratisch von der Frequenz bzw. der Spannung abhängig ist. Außerdem sind im Gleichrichterteil des Umrichters steuerbare Ventile einzusetzen.

Aufgabe der Erfindung ist es daher, eine Stromversorgungsanlage zu schaffen, die eine weitere Verbesserung des Wirkungsgrades mit sich bringt, einen vom Bordnetz unabhängigen Anlauf des Wellengenerators gewährleistet und Notlaufeigenschaften sicherstellt.

Diese Aufgabe wird gemäß den im Kennzeichen des Anspruchs 1 angegebenen Merkmalen gelöst.

Mit der Anlage nach der Erfindung wird der Wirkungsgrad um etwa 3 % bei Betrieb um die Nenndrehzahl der Hauptmaschine verbessert. In diesem Betriebsbereich fallen die Stromoberschwingungen fort. Schließlich ist es möglich, ein Bordnetz aufzubauen ohne einen Bordnetzdiesel einsetzen zu müssen.

Weiterbildungen der Erfindung sind in den Unteransprüchen enthalten.

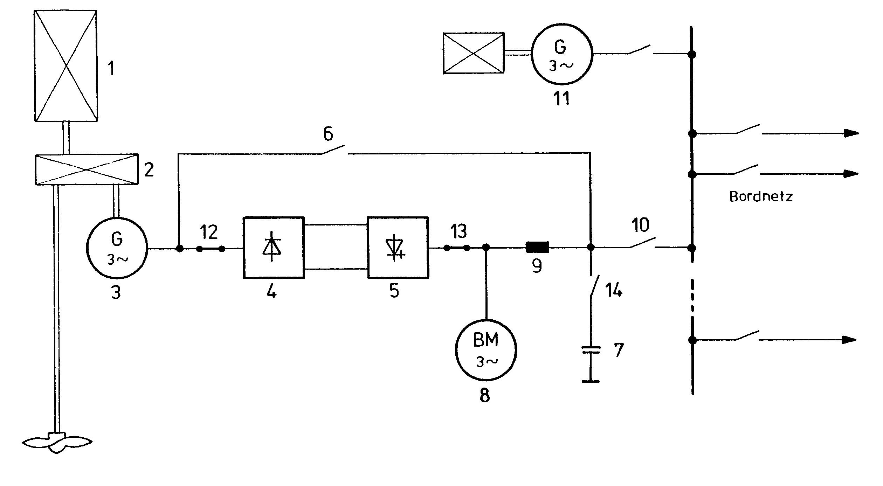

In der Zeichnung ist ein Ausführungsbeispiel nach der Erfindung dargestellt.

Eine Hauptmaschine 1 treibt z. B. über ein Getriebe 2 einen Synchrongenerator mit Dämpferkäfig 3 an. Die Polpaarzahl des Generators 3 ist so ausgelegt, daß bei Nenndrehzahl der Hauptmaschine 1 der Generator eine Spannung mit der Nennfrequenz des Bordnetzes abgibt. Die Anlage wird in dem vorgesehenen Drehzahlarbeitsbereich bis zu einer oberen Grenze, z. B. 5 % unter der Nenndrehzahl normal betrieben. Ist diese Grenze erreicht, so wird das Bordnetz mit dem Umrichter 4 und 5 auf die Frequenz des Generators 3 heruntergefahren, mit dem Generator 3 synchronisiert und mit einem Schalter 6 überbrückt. Jetzt speist der Generator 3 direkt das Bordnetz. Der Siebkreiskondensator 7, für eine Glättung der Umrichteroberschwingungen erforderlich, wird mit einem Schalter 14 abgeschaltet. Der Wellengenerator 3 erhält eine cos φ = 1-Regelung und braucht daher nicht für zusätzlichen Blindstrom größer ausgelegt werden.

Die Blindleistungsmaschine 8 bleibt über die Drossel 9 zur Blindleistungsversorgung und Spannungsregelung des Bordnetzes am Netz. Durch geeignete Stellung der Steuerimpulse des Umrichters 4 und 5 beteiligt er sich nicht mehr an der Stromführung. Ein nahtloser Übergang auf die direkte Speisung des Generators ist auch bei plötzlichen Drehzahländerungen des Generators bzw. bei plötzlichen Laststößen im Bordnetz durch ein spezielles Synchronisierverfahren möglich. In einem Bereich von z. B. ± 5 % der Motornenndrehzahl wird die Anlage in dieser Schaltung betrieben. Durch Umgehung des Umrichters 4 und 5, der Drossel 9 und des Filterkondensators 7 wird der Wirkungsgrad in dieser Betriebsart um 3 % verbessert. Außerdem werden im Bordnetz die Verluste verringert, da die Stromoberschwingungen des Umrichters nicht mehr zusätzlich die motorischen Verbraucher belasten.

Wird der Arbeitsbereich der direkten Speisung über- bzw. unterschritten, so ist unmittelbar das Öffnen des Schalters 6 möglich. Übergangslos versorgt der Umrichter wieder das Bordnetz frequenzentkoppelt vom Wellengenerator 3. Bei kleineren Hauptmaschinen, die mit angehängten Pumpen fahren, ist ein Aufbau des Bordnetzes über die Wellengeneratoranlage unabhängig von einem Bordnetzdiesel möglich. Hierfür wird der Wellengenerator 3 mit abgesenkter Spannung betrieben und über den Schalter 6 und die Netzdrossel 9 auf die Blindleistungsmaschine 8 geschaltet. Diese läuft mit kurzgeschlossener Erregerwicklung asynchron bis in die Nähe der synchronen Drehzahl hoch, wird dann erregt und fällt in Tritt. Schalter 6 wird wieder geöffnet, Umrichter 4 und 5 übernimmt die Versorgung der Blindleistungsmaschine und fährt die Anlage auf Netzfrequenz. Schalter 10 kann geschlossen werden. Da diese Wellengeneratoranlage den Schiffsbetrieb aus "dead condition" anfahren kann, gilt sie als Ersatz für das sonst geforderte, zweite unabhängige Bordnetzaggregat. Ein Hauptaggregat kann eingespart werden.

Kommt als Blindleistungsmaschine ein schleifringloser Synchrongenerator zum Einsatz, so sind Polradwicklung und rotierende Dioden mit einer sogenannten "Rosenberryschutzschaltung" gegen Überspannungen beim asynchronen Hochlauf zu schützen.

Sollte durch einen Schaden der Umrichter ausfallen, so ist im Bereich der Dieselnenndrehzahl direkt mit dem Generator 3 über den Schalter 6 ein Notbetrieb möglich. Der Umrichter kann durch Trennlaschen 12 und 13 für Wartungs- oder Reparaturzwecke freigeschaltet werden. Für den selektiven Schutz des direkt treibenden Wellengenerators 3 erhält der Schalter 6 eine Kurzschlußauslösung. Für den Parallellauf des direkt speisenden Wellengenerators 3 mit einem Bordnetzdiesel 11 erhalten die Generatoren eine Parallellaufautomatik, die immer den Wellengenerator 3 zur Brennstofferparnis voll auslasten. Eine solche Automatik ist aus der DE-PS-3 034 732 bekannt.

**Patentansprüche**

1. Stromversorgungsanlage mit einem mit variabler Drehzahl angetriebenen Synchrongenerator (3) als Wellengenerator an einer Antriebswelle einer Hauptantriebsmaschine (1), wobei der Wellengenerator (3) über eine Netzschiene direkt und über eine weitere Netzschiene mit einem Umrichter (4, 5) ein Netz versorgt, dadurch gekennzeichnet, daß die direkt speisende Netzschiene als auftrennbare Überbrückungsleitung für den Umrichter (4, 5) und einer ihm nachgeschalteten Netzdrossel (9) ausgebildet ist, die bei einer Wellengeneratorfrequenz innerhalb des Toleranzbereiches für Über- und Unterfrequenz des Netzes geschlossen und bei einer Wellengeneratorfrequenz außerhalb des Toleranzbereiches aufgetrennt ist, und daß bei laufendem Wellengenerator (3) und gesperrtem Wechselrichter (5) eine Blindleistungsmaschine (8) über einen Netzschalter (10) und die Netzdrossel (9) aus dem Stand asynchron hochläuft.

2. Stromversorgungsanlage nach Anspruch 1, dadurch gekennzeichnet, daß der Wellengenerator (3) so ausgelegt ist, daß er bei Nenndrehzahl annähernd Netzspannung und Netzfrequenz abgibt.

3. Stromversorgungsanlage nach Anspruch 1, dadurch gekennzeichnet, daß bei geschlossener Überbrückungsleitung der Wellengenerator (3) mit cos φ = 1 geregelt ist und die Blindleistungsmaschine (8) die Spannungsregelung übernimmt.

4. Stromversorgungsanlage nach Anspruch 1, dadurch gekennzeichnet, daß mit der Überbrückung des Umrichters (4, 5) ein Siebkreiskondensator (7) abgeschaltet wird.

5. Stromversorgungsanlage nach Anspruch 2, dadurch gekennzeichnet, daß der Wellengenerator (3) über ein Getriebe (2) an die Antriebswelle der Hauptmaschine (1) angeschlossen ist.

6. Stromversorgungsanlage nach Anspruch 1, dadurch gekennzeichnet, daß der Umrichter (4, 5) mittels Trennlaschen (12, 13) aus dem Kreis herausschaltbar ist.

7. Stromversorgungsanlage nach Anspruch 1, dadurch gekennzeichnet, daß bei dauerndem Parallellauf des direkt speisenden Wellengenerators (3) mit einem Dieselaggregat (11) am Netz eine Leistungsregelung mit primärer Leistungsauslastung des Wellengenerators durchgeführt wird.

**Claims**

1. Current supply installation with a synchronous generator (3) driven at variable rotational speed as shaft-mounted generator at a drive shaft of a main drive machine (1), wherein the shaft-mounted generator (3) supplies a power supply directly by way of a power supply rail and by way of a further power supply rail with a static frequency changer (4, 5), characterised thereby, that the directly feeding power supply rail is constructed as openable bridging line for the static frequency changer (4, 5) and a power supply choke (9) connected therebehind, which line is closed in the case of a shaft-mounted generator frequency within the tolerance range for upper and lower frequency of the power supply and opened in the case of a shaft-mounted generator frequency outside the tolerance range, and that when the shaft-mounted generator (3) is running and the static inverter (5) is blocked, a rotary capacitor (8) starts up from standstill by way of a power supply switch (10) and the power supply choke (9).

2. Current supply installation according to claim 1, characterised thereby, that the shaft-mounted generator (3) is so designed that it supplies approximate power supply voltage and power supply frequency at nominal rotational speed.

3. Current supply installation according to claim 1, characterised thereby, that when the bridging line is closed, the shaft-mounted generator (3) is regulated to cos φ = 1 and the rotary capacitor (8) takes over the voltage regulation.

4. Current supply installation according to claim 1, characterised thereby, that a filter circuit capacitor (7) is switched off on the static frequency changer (4, 5) being bridged over.

5. Current supply installation according to claim 2, characterised thereby, that the shaft-mounted generator (3) is connected by way of a gear (2) with the drive shaft of the main drive machine (1).

6. Current supply installation according to claim 1, characterised thereby, that the static frequency changer (4, 5) is switchable out of the circuit by means of isolating links (2, 13).

7. Current supply installation according to claim 1, characterised thereby, that a power regulation with primary power loading of the shaft-mounted generator is performed at the power supply in the case of continuous parallel running of the directly feeding shaft-mounted generator (3) with a Diesel unit (11).

**Revendications**

1. Installation d'alimentation de courant avec un générateur synchrone (3) entraîné à vitesse variable, servant de générateur de ligne d'arbre sur l'arbre d'entraînement d'une machine d'entraînement principale (1) où le générateur de ligne d'arbre (3) alimente un réseau directement par l'intermédiaire d'une barre omnibus de réseau et par l'intermédiaire d'une autre barre omnibus de réseau, avec un mutateur (4), (5), caractérisée en ce que la barre de réseau à alimentation directe se présente sous forme d'un conducteur de pontage sectionnable pour le mutateur (4, 5) et une bobine de réseau (9) montée après celui-ci, ce conducteur étant fermé pour une fréquence du générateur de ligne d'arbre comprise dans la plage des tolérances pour fréquences trop basses et trop hautes du réseau et qui est sectionnée en cas de fréquence du générateur de ligne d'arbre en dehors de la plage de tolérance et en ce que, lorsque le générateur de ligne d'arbre (3) fonctionne et que le moduleur (5) est bloqué, une machine de puissance déwattée (8) accélère en régime asynchrone depuis l'arrêt au moyen d'un commutateur de réseau (10) et de la bobine de réseau (9).

2. Installation d'alimentation de courant selon la revendication 1, caractérisée en ce que le générateur de ligne d'arbre (3) est conçu de façon à ce qu'il fournisse à la vitesse de rotation nominale une tension et une fréquence approximativement égales à celles du réseau.

3. Installation d'alimentation de courant selon la revendication 1, caractérisée en ce que, si le conducteur de pontage est fermé, le générateur de ligne d'arbre (3) est réglé sur $\varphi = 1$ et la machine de puissance déwattée (8) assure le réglage de la tension.

4. Installation d'alimentation de courant selon la revendication 1, caractérisée en ce que, en cas de pontage du mutateur (4, 5), un condensateur de circuit de filtrage (7) est déclenché.

5. Installation d'alimentation de courant selon la revendication 2, caractérisée en ce que le générateur de ligne d'arbre (3) est raccordé à l'arbre moteur de la machine principale (1) par l'intermédiaire d'une transmission (2).

6. Installation d'alimentation de courant selon la revendication 1, caractérisée en ce que le mutateur (4, 5) peut être isolé du circuit au moyen des barrettes de sectionnement (12, 13).

7. Installation d'alimentation de courant selon la revendication 1, caractérisée en ce que, en cas de fonctionnement en parallèle de longue durée du générateur de ligne d'arbre (3) à alimentation directe avec un groupe diesel (11) couplé au réseau, une régulation de la puissance est réalisée avec mise en charge par priorité du générateur de ligne d'arbre.

1